# EUROPEAN PATENT APPLICATION

(11) **EP 1 637 267 A1**
(43) Date of publication of application: **22.03.2006**
(21) Application number: 04735984.9
(22) Date of filing: 03.06.2004
(51) Int. Cl.: B23K 1/19

(54) **METHOD FOR BRAZING ALUMINUM MATERIAL**

(30) Priority: 04.06.2003 JP 2003160045
(71) Applicant: Furukawa-Sky Aluminum Corp., Tokyo 130-0013 (JP)
(72) Inventor: DOKO, Takeyoshi c/o Furukawa-Sky Aluminum Corp., Sumida-ku, Tokyo 1300013 (JP); YANAGAWA, Yutaka c/o Furukawa-Sky Aluminum Corp., Sumida-ku, Tokyo 1300013 (JP)
(74) Representative: Forstmeyer, Dietmar
(86) International application number: PCT/JP2004/008078
(87) International publication number: WO 2004/108337

(57) **Abstract**

A method of brazing an aluminum material, which contains: using an aluminum alloy brazing sheet, wherein an aluminum alloy containing 0.2 to 1 mass% of Mg is used for a core alloy; the brazing sheet, in which an Mg amount in a filler alloy is 0.05 mass% or less, is used; and the brazing is carried out by using a brazing furnace that has at least two chambers for brazing in an inert gas atmosphere under a heating condition of a temperature-rising time of within 12 minutes from a temperature exceeding 200°C, to 570°C; a brazing furnace and an aluminum alloy brazing sheet, each of which is used in the method; and a heat exchanger, which is produced by the method.

## Description

### TECHNICAL FIELD

The present invention relates to a method of brazing an aluminum alloy material, specifically to a brazing method without using any flux.

### BACKGROUND ART

Since aluminum materials are excellent in thermal conductivity and are lightweight, they are used for heat exchangers, for example, heat exchangers for automobiles. Heat exchangers are mainly manufactured, by a brazing method using a brazing sheet that has an aluminum alloy core alloy clad with a filler alloy on one or both surfaces thereof.

Representative brazing methods include a flux brazing method and a vacuum brazing method, and a CAB method (controlled atmosphere brazing method), for brazing in an inert gas using a non-corrosive flux, has been the mainstream in recent years. Brazing is possible by this method by permitting the flux breaks and removes an oxide film of the filler alloy.

Nonconformity upon brazing seldom occurs by the CAB method using a non-corrosive flux, since no processing for removing the flux is needed after brazing; and, the force for breaking the oxide film on the surface that may cause problems in brazing the aluminum alloy is large.

However, by this method, it is difficult to apply the flux at minute portions, causing problems that clogging by the flux after brazing occurs, or contrary to the above, that coating of the flux is so insufficient that some portions remain that cannot be brazed. Further, there may be caused such problems that an expensive coating apparatus is necessary for the CAB method, and that removal of the flux on the surface requires much labor in the case of a product, such as an evaporator, to be subjected to surface treatment after brazing.

Based on such background, a brazing method that does not require the use of flux has been desired.

An example of the brazing method using no flux was proposed, for example, in JP-A-2003-126986 ("JP-A" means unexamined published Japanese patent application), but there is no industrially established method. This is due to the problem of reliability on brazing using no flux.

Accordingly, hitherto, it has been a problem that brazing is impossible without using flux, and it is also impossible to form fillets.

Other and further features and advantages of the invention will appear more fully from the following description, taken in connection with the accompanying drawings.

### BRIEF DESCRIPTION OF DRAWINGS

Fig. 1 is a side view of a mini-core produced in an Example according to the present invention.
Fig. 2 is an illustrative cross-sectional side view of the brazing furnace used in the Example according to the present invention.

### DISCLOSURE OF INVENTION

According to the present invention, there is provided the following means:
(1) A method of brazing an aluminum material, comprising: using an aluminum alloy brazing sheet, wherein an aluminum alloy comprising 0.2 mass% or more but 1 mass% or less of Mg is used for a core alloy; said brazing sheet, in which an Mg amount in a filler alloy is 0.05 mass% or less, is used; and said brazing is carried out by using a brazing furnace that comprises at least two chambers for brazing in an inert gas atmosphere under a heating condition of a temperature-rising time of within 12 minutes from a temperature exceeding 200°C, to 570°C;
(2) The brazing method according to (1), wherein an oxygen concentration in the chamber for heating at a temperature equal to or lower than the melting point of the filler alloy is 20 ppm or less;
(3) The brazing method according to (1) or (2), wherein carbon is placed in the chamber for heating at a temperature equal to or lower than the melting point of the filler alloy;
(4) A brazing furnace, which is used in the brazing method according to (3), wherein the chamber for heating at a temperature equal to or lower than the melting point of the filler alloy is constituted using carbon;
(5) An aluminum alloy brazing sheet, which is used in the brazing method according to any one of (1) to (3), comprising: using an aluminum alloy comprising 0.2 mass% or more but 1 mass% or less of Mg for a core alloy; and using a filler alloy, in which an Mg amount in said filler alloy is 0.05 mass% or less; and
(6) A heat exchanger, which is produced by the method according to any one of (1) to (3), by using the brazing sheet according to (5).

### BEST MODE FOR CARRYING OUT THE INVENTION

The inventors of the present invention found, through intensive studies, that brazing without using any flux is possible, by allowing Mg in a core alloy to diffuse into a filler alloy during a heating process, by heating within a prescribed heating time using an aluminum brazing sheet that comprises prescribed amounts of Mg in the core alloy and the filler alloy. The present invention has been attained based on the above finding.

The present invention will be described in detail hereinafter.

In the brazing method of the present invention, the aluminum brazing sheet is used, which comprises a core alloy made of an aluminum alloy comprising 0.2 mass% or more but 1 mass% or less of Mg, and a filler alloy in which an amount of Mg is 0.05 mass% of less.

Mg to be added to the core alloy diffuses into the filler alloy before the filler alloy melts, when the temperature is increased by heating for brazing. Consequently, the molten filler alloy has a composition comprising Mg in Al-Si when the filler alloy is melted. Since Mg in the molten filler alloy reacts with an aluminum oxide film formed on the surface of the filler alloy, the oxide film is cut apart when the aluminum oxide film is replaced with an Mg oxide film, to thereby make it possible to conduct brazing.

The content of Mg in the core alloy is 0.2 mass% or more and 1 mass% or less, to exhibit the above-mentioned action and effect. When the content of Mg is too large, the Mg oxide film is formed since a too large quantity of Mg diffuses on the surface of the filler alloy during the heating process for brazing.

The preferable content of Mg in the core alloy differs depending on the thickness of the filler alloy. Although a slight amount of Mg in the core alloy is sufficient for enhancing the Mg concentration in the filler alloy when the thickness of the filler alloy is small. On the other hand, a sufficient quantity of Mg should be added in the core alloy in advance when the thickness of the filler alloy is large, since Mg diffused from the core alloy during the brazing process is diluted with the filler alloy.

When the thickness of the filler alloy is 5 µm or more but less than 20 µm, a particularly preferable content of Mg in the core alloy is 0.2 mass% or more and 0.6 mass% or less. When the thickness of the filler alloy is 20 µm or more but less than150 µm, on the other hand, a particularly preferable content of Mg in the core alloy is 0.3 mass% or more but less than 1 mass%.

The amount of addition of Mg in the core material alloy of the brazing sheet that can be used in the brazing method of the present invention is as described above, and other elements that may be added may be determined so that the elements do not melt at the brazing temperature, and by considering the mechanical strength and corrosion resistance of the resultant product. For example, the amount of Si to be added may be adjusted to be 1.5 mass% or less so that the core alloy does not melt at the brazing temperature; elements, such as Si, Fe, Mn, Ni, or Cu, may be added when the material is desired to have a higher strength; or Zn, In, or Sn may be added when the material is desired to exhibit a sacrificing effect; or elements that are known in the art for conventional brazing sheets may be added.

The particularly preferable composition of the core material alloy of the brazing sheet that can be used in the present invention is an aluminum alloy in which one or at least two of 0.1 mass% or more and 1.4 mass% or less of Si, 0.1 mass% or more and 2 mass% or less of Fe, 1.4 mass% or less of Cu, and 0.1 mass% or more and 1.8 mass% or less of Mn, is/are added, in addition to the above prescribed amount of Mg.

On the other hand, when the amount of addition of Mg in the filler alloy is too large, Mg reacts, during the heating process for brazing, with oxygen contained in the inert gas as an impurity, and forms an oxide film on the surface of the filler alloy during the temperature is risen. Since the film thus formed is an Mg-based oxide film, the oxide film does not react with Mg in the filler alloy according to the above manner, and nonconformity in brazing is occurred due to the oxide film that is hardly cut apart.

Accordingly, the content of Mg in the filler alloy is 0.05 mass% or less. The smaller the content of Mg is, the more preferably it is, and it is most preferably that the filler alloy does not contain Mg at all.

Any materials containing additive elements other than Mg in the filler alloy may be used as the filler alloy for the brazing sheet. For example, the filler alloy is preferably an aluminum alloy filler alloy containing a prescribed amount of Si, with or without Mg in the prescribed amount. It is also possible to add Fe, Cu, Zn, or the like, in the alloy with a Si content of 7 mass% or more and 13 mass% or less.

The brazing sheet of the present invention is not limited to a brazing sheet of three-layer structure of filler alloy/core alloy/filler alloy. Possible structures of the brazing sheet include, for example, a dual layer structure of filler alloy/core alloy; a three-layer structure, e.g. filler alloy/core alloy/skin material (the skin material is applied for improving corrosion resistance and for preventing elements from diffusing from the core alloy), and filler alloy/core alloy 1/core alloy 2; and a four-layer structure, e.g. filler alloy/core alloy 1/core alloy 2/filler alloy, and filler alloy/core alloy 1/core alloy 2/skin material. Selection of these structures and respective alloys may be determined from the required characteristics of the product manufactured by brazing. The core alloy in contact with the filler alloy may have the composition according to the present invention, when the brazing sheet comprises two or more of layers other than the filler alloy layer. Further, when the thickness of the core alloy 1 is 70 µm or less in the above examples, it is sufficient that the core alloy 2 has the composition according to the present invention, even if no Mg is added in the core alloy 1.

According to the brazing method of the present invention, brazing is made possible, by using the brazing sheet in which the amounts of Mg in the filler alloy and in the core alloy are defined as above, and by carrying out the brazing under the conditions described below. That is, the force of the brazing sheet for breaking the aforementioned film during the brazing process is weak, and brazing is only made possible by restricting the brazing conditions as follows.

First, the heating condition in the brazing method of the present invention is described below.

In the brazing method of the present invention, the heating for brazing is carried out under the heating conditions in which the temperature-rising time required for heating from a temperature exceeding 200°C, to 570°C, is within 12 minutes. The temperature is risen over a period of time of 20 minutes or more in the conventional brazing method, for brazing a structure such as a heat exchanger. Contrary to the above, the rise-up time should be within 12 minutes in the present invention. This heating condition is to prevent the oxide film from being formed, by restricting the amount of Mg diffused on the surface of the filler alloy, and to suppress the oxide film formed from growing.

The mechanism for brazing with no use of flux in the brazing method of the present invention, takes advantage of diffusion of Mg in the core alloy into the filler alloy during the heating process for brazing, as described above. When the rise-up rate of temperature is slow, most of Mg in the core alloy arrives at the filler alloy in a low temperature region upon temperature-rising of the heating process for brazing, and an Mg-based oxide film is formed on the surface upon heating thereafter. In that case, since the force of the brazing sheet for breaking the film is conspicuously weaker than the flux as described above, the Mg-based oxide film can be hardly broken. Accordingly, in the present invention, the amount of diffusion of Mg into the surface of the filler alloy is restricted, by restricting the rise-up time from a temperature above 200°C to 570°C, to be within 12 minutes, and growth of the oxide film is also restricted as low as possible by shortening the growth time of the oxide film. The shorter the rise-up time of temperature is, the more preferable it is; and, actually, the time is particularly preferably within 10 minutes. Although the lower limit of the rise-up time of temperature is not particularly limited, it is generally 2 minutes or more.

Next, the atmosphere in the brazing method of the present invention will be described below.

The brazing method of the present invention is carried out in an inert gas atmosphere. This is because, in an atmosphere high in an oxygen concentration, the oxide film grows during heating for brazing, and the thus-formed film is hardly breakable by the method of the present invention, which results that brazing is impossible. The lower the oxygen concentration is, the lesser the growth of the oxide film is; and the oxygen concentration in that range is preferably as low as possible. For example, Ar gas may be used for the inert gas, and nitrogen gas is preferable considering the cost, from industrial viewpoint. Further, use may also be made of an inert gas having the similar level of purity as used in the CAB method using the conventional non-corrosive flux for brazing.

In particular, the oxygen concentration in the heating from 200°C to 570°C is preferably 20 ppm or less, more preferably 10 ppm or less, and further preferably 3 ppm or less.

The oxygen concentration at around the brazing temperature in the brazing method of the present invention may be approximately the same as an oxygen concentration used in the CAB method using the conventional non-corrosive flux for brazing.

Next, the brazing furnace in the brazing method of the present invention will be described below.

In the present invention, brazing is carried out by using the brazing sheet, and in said brazing, a brazing furnace comprising at least two chambers is utilized. Although the heating rate in the heating for brazing as described in the above is required to carry out the brazing method of the present invention, a brazing furnace having at least two chambers is necessary for attaining the aforementioned condition. For example, the atmosphere in a first chamber of the brazing furnace is replaced with an inert gas for pre-heating. Brazing is performed in the inert gas atmosphere in the second chamber of the brazing furnace by heating so as to reach a brazing temperature (the melting point of the filler alloy).

A preferable structure of the brazing furnace may comprises: a first chamber that is a gas-replacing chamber not conducting heating; a second chamber that is a heating camber (pre-heating chamber) to a temperature of 500°C or higher; and a third chamber that is a heating chamber for brazing to heat to a brazing temperature of about 600°C; and a cooling chamber that may be optionally provided afterward from these chambers. The gas-replacing chamber may be independently provided, for sufficiently replacing the gas in the pre-heating chamber.

Further, for example, to make the heating temperature in the product uniform, the second chamber may be divided into two or more chambers, and/or the third chamber may be divided into two or more chambers.

In the present invention, a carbon material is preferably placed in the furnace. By placing the carbon material, carbon reacts with oxygen in the inert gas to form CO, to reduce the oxygen concentration in the atmosphere thereby to suppress growth of the oxide film. Accordingly, the carbon material is preferably placed in the chamber where the temperature does not reach the brazing temperature (the melting point of the filler alloy). For example, molded carbon fiber can be used as the carbon material.

Further, it is more preferable to form the inner structure of the furnace with graphite, instead of separately placing the carbon material in the furnace.

The brazing method of the present invention is particularly preferable for brazing a heat exchanger. This is because the heat exchanger is composed of many parts, such as fins, tubes and plates, and the heat exchanger has portions difficult to coat with the flux thereon.

Further, according to the brazing method of the present invention, brazing is also possible in the presence of the conventional non-corrosive flux, since Mg is incorporated into the core alloy. That is, the present invention is applicable, by coating the flux at the portions where higher reliability of brazing is required such as the portions to be bonded between the tube and the tank of the heat exchanger.

In that case, it is preferable from the view point of cost performance to permit the proportion of the portions to be brazed by the method of the present invention using no flux, to account for 80% or more of the portions to be brazed and bonded of the entire product. This is because the difference in cost between the method of the present invention and the conventional CAB method becomes small when the above proportion is less than 80%.

According to the brazing method of the present invention, it is possible to conduct favorable brazing, without using any flux. Further, the brazing furnace and the brazing sheet, each of which is according to the present invention, can be preferably used in the brazing method of the present invention.

### EXAMPLES

The present invention will be described in more detail based on examples given below, but the invention is not meant to be limited by these.

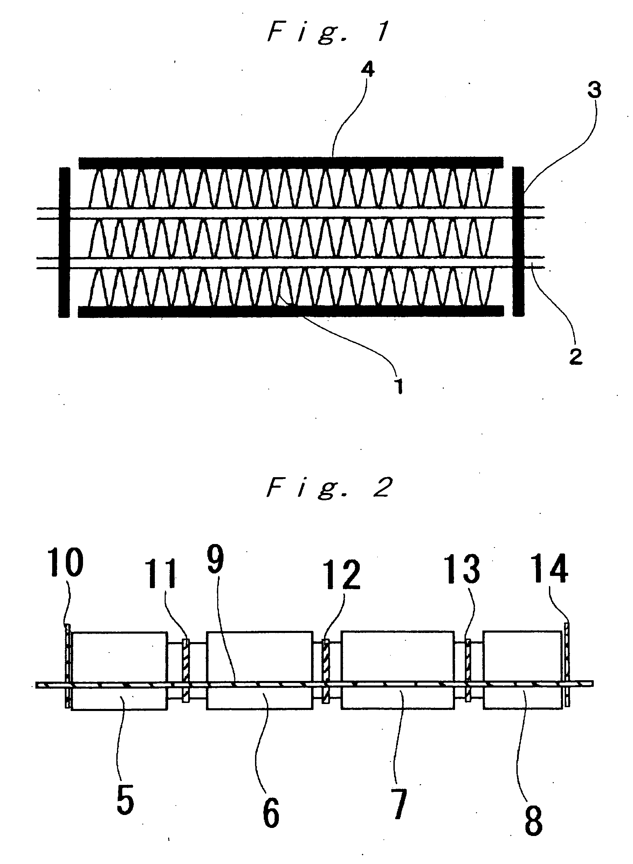

Brazing sheets and bare thin alloy sheets each having the composition, as shown in Table 1, were produced in a usual manner. In Table 1, the total of composition ratios in constitution each should be 100%, but a part of the composition ratios are omitted. The thus-obtained materials were subjected to working, e.g. corrugating, electric welding, or punching, and then the thus-worked parts were assembled, as shown in Table 2, to thereby produce mini-cores having the shape, as shown in Fig. 1, respectively. Fig. 1 is an illustrative side view of the mini-core produced in the Examples, in which a fin material 1 having a number of peaks of 50 with width 22 mm and height 10 mm, and two tube materials 2 with width 22 mm, height 2 mm and length 100 mm were inserted into a plate material 3 with width 32 mm having holes, and plate materials 4 with width 22 mm were placed on the upper and lower surfaces of the resultant assembly.

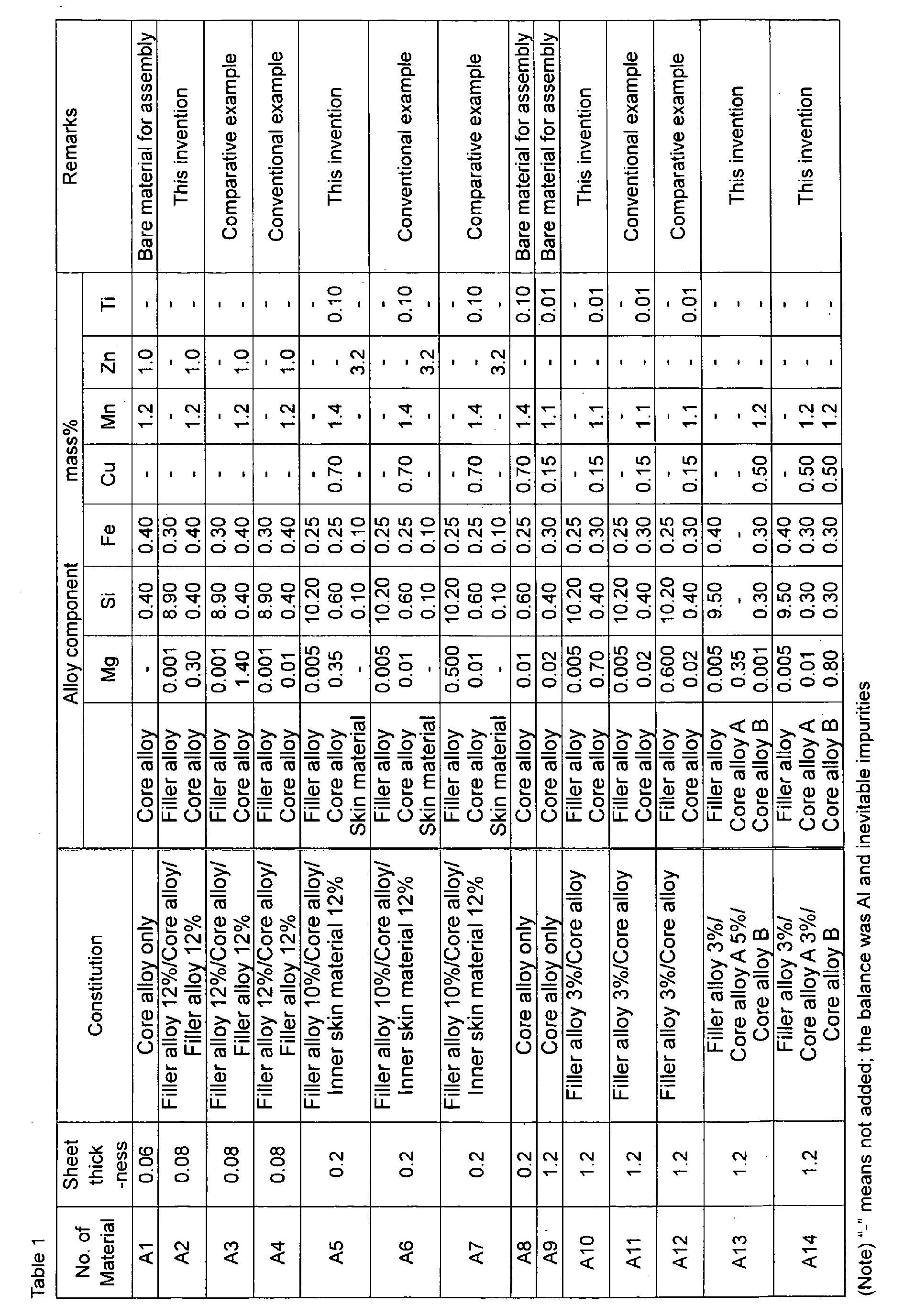

**Table 2**

| Assembly No. | 1: Fin | 2: Tube | 3: Plate for inserting tube | 4: Plate in contact with fin | Remarks |
|---|---|---|---|---|---|
| B1 | A1 | A5 | A10 | A10 | This invention |
| B2 | A1 | A5 | A10 | A13 | This invention |
| B3 | A1 | A5 | A10 | A14 | This invention |
| B4 | A1 | A6 | A11 | A11 | Conventional example |
| B5 | A1 | A7 | A12 | A12 | Comparative example |
| B6 | A2 | A8 | A10 | A9 | This invention |
| B7 | A3 | A8 | A10 | A9 | Comparative example |
| B8 | A4 | A8 | A11 | A9 | Conventional example |

The thus-obtained mini-core was heated for brazing, in the brazing furnace, as shown in Fig. 2, under the conditions, as described in Table 3. Fig. 2 is a schematic cross-sectional side view of the brazing furnace used in the Examples. In Fig. 2, the brazing furnace is divided into four chambers of a gas replacement chamber 5, a pre-heating chamber 6, a brazing chamber 7, and a cooling chamber 8, and the mini-core was transferred between the chambers with a transfer line 9. Further, at each inlet and outlet of respective chamber, doors 10 to 14 were provided.

Common conditions not shown in Table 3 are as follows.

The core was placed in the gas replacement chamber after closing the door between the pre-heating chamber and the gas replacement chamber, and nitrogen gas was blown into the chamber for 3 to 5 minutes, to adjust the oxygen concentration in the gas replacement chamber to 5,000 ppm or less. Then, the core was transferred to the pre-heating chamber, by opening the door between the gas replacement chamber and the pre-heating chamber, while the door between the brazing chamber and the pre-heating chamber and the door between the gas replacement chamber and the outside of the furnace each were closed.

Immediately after the transferring of the core to the pre-heating chamber, the door between the pre-heating chamber and the gas replacement chamber was closed, to start heating. The oxygen concentration in the gas during the heating step was controlled by, for example, changing the flow rate of nitrogen gas. The conditions in this step are shown in Table 3. After the completion of the pre-heating, the door between the pre-heating chamber and brazing chamber was opened, and the core was transferred to the brazing chamber that had been maintained at an atmospheric temperature of 610°C. The atmosphere of the brazing chamber was nitrogen gas with an oxygen concentration of 15 ppm.

After transfer of the core, the door between the pre-heating chamber and the brazing chamber was closed, to conduct brazing. The temperature of the core was risen to 595°C and maintained at the temperature for 3 minutes for brazing, and then the resultant core was transferred to the cooling chamber. The conditions after transfering into the brazing chamber were the same for each of the samples.

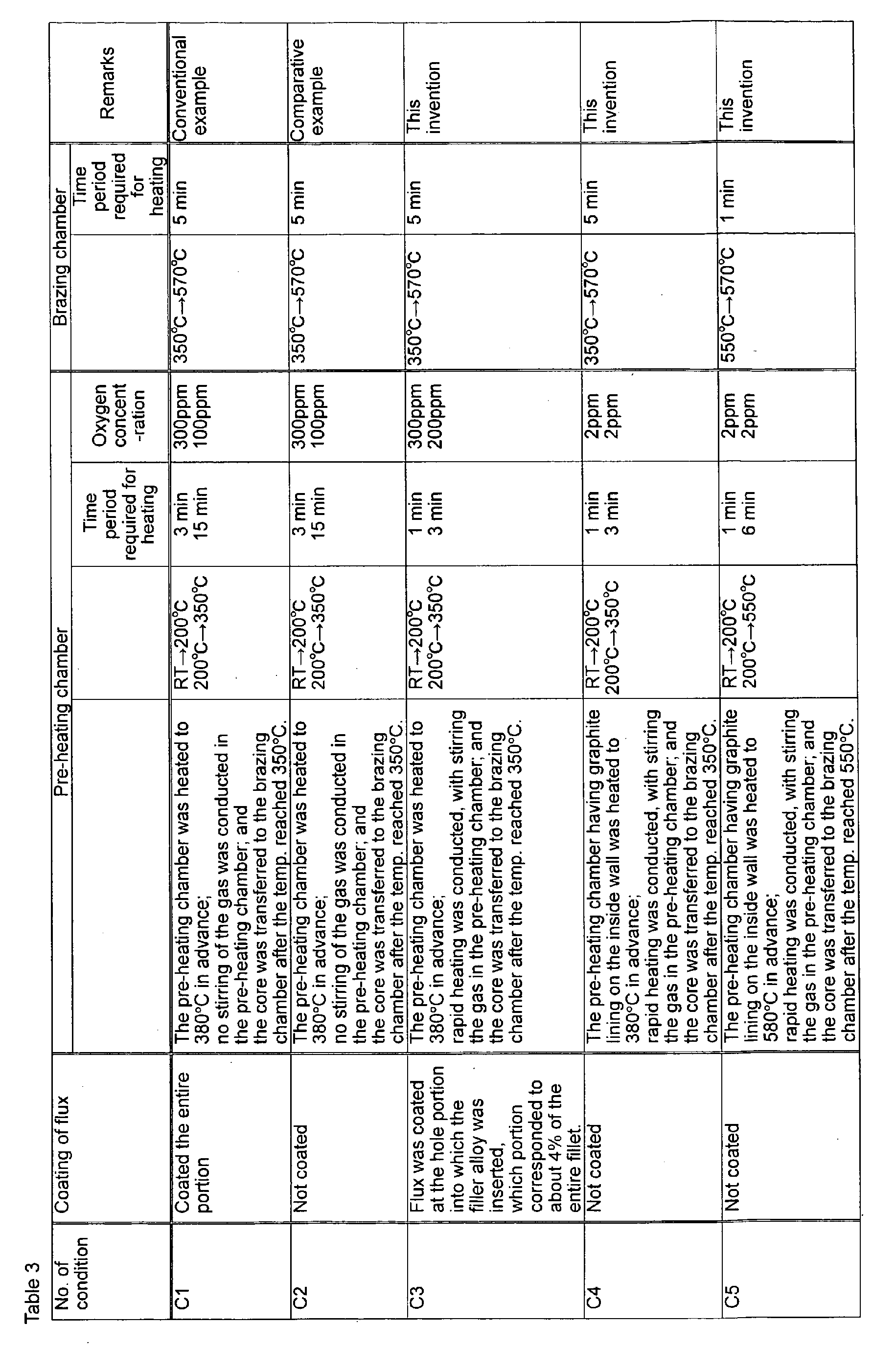

The combinations of the brazing conditions and the cores to be brazed are shown in Table 4. In Samples 17, 18 and 22, the portions between the plates and the tubes were brazed, by applying a flux, as in a conventional manner.

With respect to the mini-cores after the completion of brazing, the bonding ratios of the fin material (a ratio obtained by dividing the length of the bonded portion in the fin material by the total length of the peak portion in said fin material (%)) were measured on the bonded portion between the plate and the fin and the bonded portion between the tube and the fin. Further, the state of the bonded portion between the tube and the plate was observed with the naked eye. The results are shown in Table 4. The mark "*" in the table shows that the fillet was not cleanly formed upon brazing, due to a reaction between Mg in the plate and flux.

**Table 4**

| No. | Core No. (Assembly No.) | Brazing condition No. | Bonding ratio between tube and fin (%) | Bonding ratio between plate and fin (%) | Bonded portion between tube and plate | Remarks |
|---|---|---|---|---|---|---|
| 1 | B1 | C1 | 70 | 50 | Not bonded in some portions (*) | Comparative example |
| 2 | B2 | C1 | 70 | 75 | Not bonded in some portions (*) | Comparative example |
| 3 | B3 | C1 | 70 | 80 | Cleanly bonded | Comparative example |
| 4 | B4 | C1 | 100 | 100 | Cleanly bonded | Conventional example |
| 5 | B5 | C1 | 20 | 20 | Almost all portion was not bonded | Comparative Comparative example example |
| 6 | B6 | C1 | 80 | 80 | Not bonded in some portions (*) | Comparative example |
| 7 | B7 | C1 | 30 | 30 | Not bonded in some portions (*) | Comparative example |
| 8 | B8 | C1 | 100 | 100 | Cleanly bonded | Conventional example |
| 9 | B1 | C2 | 5 | 5 | Almost all portion was not bonded | Comparative example example |
| 10 | B2 | C2 | 5 | 5 | Almost all portion was not bonded | Comparative example |
| 11 | B3 | C2 | 5 | 5 | Almost all portion was not bonded | Comparative example |
| 12 | B4 | C2 | 0 | 0 | Almost all portion was not bonded | Comparative example |
| 13 | B5 | C2 | 0 | 0 | Almost all portion was not bonded | Comparative example example |
| 14 | B6 | C2 | 5 | 5 | Almost all portion was not bonded | Comparative example |
| 15 | B7 | C2 | 0 | 0 | Almost all portion was not bonded all | Comparative example example |
| 16 | B8 | C2 | 0 | 0 | Almost all portion was not bonded | Comparative example |
| 17 | B1 | C3 | 95 | 100 | Not bonded in some portions (*) | Comparative Example |
| 18 | B2 | C3 | 95 | 100 | Not bonded in some portions (*) | Partially Comparative Example |
| 19 | B3 | C3 | 95 | 100 | Cleanly bonded | This invention |
| 20 | B4 | C3 | 0 | 0 | Cleanly bonded | Comparative example |

| | | | | | | |
|---|---|---|---|---|---|---|
| 21 | B5 | C3 | 0 | 0 | Almost all portion was not bonded | Comparative example |
| 22 | B6 | C3 | 96 | 96 | Not bonded in some portions (*) | Partially Comparative Example |
| 23 | B7 | C3 | 0 | 0 | Not bonded in some portions (*) | Comparative example |
| 24 | B8 | C3 | 0 | 0 | Cleanly bonded | Comparative example |
| 25 | B1 | C4 | 100 | 100 | Cleanly bonded | This invention |
| 26 | B2 | C4 | 100 | 100 | Cleanly bonded | This invention |
| 27 | B3 | C4 | 99 | 99 | Cleanly bonded | This invention |
| 28 | B4 | C4 | 0 | 0 | Almost all portion was not bonded | Comparative example |
| 29 | B5 | C4 | 0 | 0 | Almost all portion was not bonded | Comparative example |
| 30 | B6 | C4 | 100 | 100 | Cleanly bonded | This invention |
| 31 | B7 | C4 | 0 | 0 | Almost all portion was not bonded | Comparative example |
| 32 | B8 | C4 | 0 | 0 | Almost all portion was not bonded | Comparative example |
| 33 | B1 | C5 | 100 | 100 | Cleanly bonded | This invention |
| 34 | B2 | C5 | 100 | 100 | Cleanly bonded | This invention |
| 35 | B3 | C5 | 99 | 99 | Cleanly bonded | This invention |
| 36 | B4 | C5 | 0 | 0 | Almost all portion was not bonded | Comparative example |
| 37 | B5 | C5 | 0 | 0 | Almost all portion was not bonded | Comparative example |
| 38 | B6 | C5 | 100 | 100 | Cleanly bonded | This invention |
| 39 | B7 | C5 | 0 | 0 | Almost all portion was not bonded | Comparative example |
| 40 | B8 | C5 | 0 | 0 | Almost all portion was not bonded | Comparative example |

It is apparent from Table 4 that, in the Comparative examples, clean bonding was impossible due to the oxide film formed upon heating, since the amount of Mg was too large or too small in the core alloy or the filler alloy, or the temperature-rising period of time was too long.

On the contrary, according to the brazing method of the present invention, brazing was possible, despite of using no flux (Samples 19, 25, 26, 27, 30, 33, 34, 35 and 38). Further, in Samples 27 and 35, the fin (1) and the plate (4) were cleanly bonded, despite that the core alloy (A) of the plate material (4) bonded to the fin material (1) did not contain Mg or contained in a too small amount of Mg in said core material. This is because Mg was contained in the core alloy (B) of the plate material (4), and the surface film of the fin material was broken, by the filler at the plate material side.

### INDUSTRIAL APPLICABILITY

According to the brazing method of the present invention, a brazed product can be manufactured, without using any flux, via brazing using an aluminum alloy brazing sheet. Thus, the present invention can exhibit industrially remarkable effects.

Having described our invention as related to the present embodiments, it is our intention that the invention not be limited by any of the details of the description, unless otherwise specified, but rather be construed broadly within its spirit and scope as set out in the accompanying claims.

## Claims

1. A method of brazing an aluminum material, comprising: using an aluminum alloy brazing sheet, wherein an aluminum alloy comprising 0.2 mass% or more but 1 mass% or less of Mg is used for a core alloy; said brazing sheet, in which an Mg amount in a filler alloy is 0.05 mass% or less, is used; and said brazing is carried out by using a brazing furnace that comprises at least two chambers for brazing in an inert gas atmosphere under a heating condition of a temperature-rising time of within 12 minutes from a temperature exceeding 200°C, to 570°C.

2. The brazing method according to Claim 1, wherein an oxygen concentration in the chamber for heating at a temperature equal to or lower than the melting point of the filler alloy is 20 ppm or less.

3. The brazing method according to Claim 1 or 2, wherein carbon is placed in the chamber for heating at a temperature equal to or lower than the melting point of the filler alloy.

4. A brazing furnace, which is used in the brazing method according to Claim 3, wherein the chamber for heating at a temperature equal to or lower than the melting point of the filler alloy is constituted using carbon.

5. An aluminum alloy brazing sheet, which is used in the brazing method according to any one of Claims 1 to 3, comprising: using an aluminum alloy comprising 0.2 mass% or more but 1 mass% or less of Mg for a core alloy; and using a filler alloy, in which an Mg amount in said filler alloy is 0.05 mass% or less.

6. A heat exchanger, which is produced by the method according to any one of Claims 1 to 3, by using the brazing sheet according to Claim 5.
